# EUROPÄISCHE PATENTSCHRIFT

(11) **EP 2 489 552 B1**
(45) Veröffentlichungstag und Bekanntmachung des Hinweises auf die Patenterteilung: **19.03.2014**
(21) Anmeldenummer: 12150967.3
(22) Anmeldetag: 12.01.2012
(51) Int. Cl.: B60R 1/06, B60R 1/078

(54) **Kraftfahrzeug mit einem Außenrückspiegel**
Motor vehicle with a rear view mirror
Véhicule automobile avec un rétroviseur

(30) Priorität: 18.02.2011 DE 102011000824
(43) Veröffentlichungstag der Anmeldung: 22.08.2012
(73) Patentinhaber: Yilmaz, Turhan, 50859 Köln (DE)
(72) Erfinder: Yilmaz, Turhan, 50859 Köln (DE)
(74) Vertreter: Fritz, Edmund Lothar

(56) Entgegenhaltungen:
- EP-B1- 0 385 814
- GB-A- 499 802
- JP-A- 8 282 379
- US-A- 2 717 531

## Beschreibung

Die vorliegende Erfindung betrifft ein Kraftfahrzeug, insbesondere Nutzfahrzeug, mit einem Außenspiegel, welcher wenigstens eine Spiegelfläche aufweist, die aus ihrer Normalstellung mittels eines Schwenkmechanismus in eine Außenstellung verfahrbar ist, in der diese Spiegelfläche einen größeren Abstand zur Außenbegrenzung der Karosserie des Fahrzeugs aufweist als in der Grundstellung, wobei der Schwenkmechanismus derart ausgebildet ist, dass die Spiegelfläche in der Außenstellung gegenüber der Grundstellung nach außen hin verschoben und gleichzeitig um einen Winkel zum Kraftfahrzeug hin gekippt ausgerichtet ist, wobei der Schwenkmechanismus ein Gestänge umfasst, welches nach Art eines Parallelogrammgestänges ausgebildet ist, welches wenigstens zwei in einem Endbereich an einem fest im Gehäuse des Außenspiegels angebrachten Bauelement angelenkte Stangen oder Lenker umfasst, welche in ihrem anderen Endbereich an zueinander beabstandeten Punkten an einem schwenkbaren Bauelement angelenkt sind, an welchem sich die Spiegelfläche befindet, wobei die Stangen oder Lenker bei der Schwenkbewegung in die Außenstellung unterschiedliche Schwenkwinkelwege zurücklegen und die Stangen oder Lenker unterschiedlich lang sind.

Es ist bekannt, dass herkömmliche Außenrückspiegel dem Fahrer nur eine rückwärtige Sicht mit einem begrenzten Blickwinkel liefern, was in bestimmten Situationen Insbesondere dem Fahrer eines Nutzfahrzeugs keine ausreichende Information über die Situation hinter dem Fahrzeug liefert. Nur beispielhaft sei die Aufnahme eines Containers auf ein Zugfahrzeug genannt, bei der der Fahrer auch eine Einsicht In einen Bereich benötigt, der sich etwa mittig an der Rückseite des Fahrzeugs befindet, die herkömmliche Außenrückspiegel nicht liefern. Es wurde daher verschiedene Lösungen vorgeschlagen, um den Winkelbereich, den ein Auβenrückspiegel liefert, zu vergrößern.

Es wurden beispielsweise Doppelspiegelanordnungen entwickelt, die zwei zueinander in der Höhe und gegebenenfalls auch seitlich versetzte Einzeispiegel umfassen, wobei die Einzelspiegel an einem Gestänge jeweils gelenkig befestigt und somit von Hand einstellbar sind und die Einzelspiegel unterschiedlich einstellbar sind, um so einen toten Winkel auszuschließen. Die Auslegeschrift DE 1 228 524 beschreibt eine solche Doppelspiegelanordnung.

Die DE 201 07 944 U1 beschreibt ebenfalls eine Anordnung von mehreren Rückspiegeln, wobei hier an einem serienmäßigen Außenspiegel eines Fahrzeugs über ein Kugellager eine Rückspiegelergänzung angebracht wird, die in verschiedene Winkelstellungen verschwenkbar ist und die zudem in sich wiederum aus zwei Einzelspiegeln besteht, bei denen innerhalb des Gehäuses des äußeren Einzelspiegels die Spiegelfläche schwenkbar ist, um den einsehbaren Winkel zu verändern. Zwar wird bei einer solchen Anordnung von spiegeln die Rücksicht des Fahrers erweitert und durch die Verstellberkeit kann der tote Winkel auf ein Minimum reduziert werden, aber von der Fahrzeugkabine aus kragt die Spiegelanordnung erheblich weiter nach außen, da die Rückspiegelergänzung auf den vorhandenen Spiegel aufgesetzt wird. Da dadurch die Fahrzeugbreite vergrößert wird, sind solche Spiegelanordnungen in Hinblick auf die Zulässigkeit nach der Straßenverkehrszulassungsordnung problematisch. Dies gilt generell für alle Anordnungen von Außenrückspiegeln, die von der Karosserie aus weiter nach außen ragen als der serienmäßig für das Fahrzeug vorgesehene Außenspiegel, Insbesondere Nutzfahrzeuge, die im öffentlichen Straßenverkehr zugelassen sind, wie Lastkraftwagen, haben ohnehin schon eine große Fahrzeugbreite, so dass durch auskragende Rückspiegelergänzungen der genannten Art die zulässige Breite in jedem Fall überschritten wird.

Von innerhalb eines Fahrzeugs über einen Stellmechanismus varstellbare Außenspiegel sind ebenfalls bereits seit längerem bekannt und beispielsweise in der Auslegeschrift DE 1 275 898 beschrieben. Die DE 2 258 296 A1 beschreibt ebenfalls eine Ferneinsteileinrichtung für einen äußeren Rückspiegel eines Kraftfahrzeugs, wobei hier eine Spiegelfläche innerhalb eines starr am Fahrzeug angebrachten Spiegelgehäuses über den Stellmechanismus in verschiedene Richtungen geschwenkt werden kann. Die Distanz der Spiegelfläche zum Führerhaus des Fahrzeugs ändert sich jedoch bei der Verstellung nicht, da die Spiegelfläche im Spiegelgehäuse verbleibt. Der bei Nutzfahrzeugen bei Anwendungen der oben genannten Art zur Einsicht erforderliche Winkelbereich kann hier daher bei Verstellung nicht erreicht werden.

Aus der DE 10 2009 036 259 A1 ist eine Außenrückspiegelanordnung bekannt mit einem Hauptrückspiegel und einem Weitwinkelrückspiegel, die voneinander unabhängig verstellbar sind, wobei sich hier jedoch zwei getrennte im Winkel versteilbare Spiegelflächen in einem gemeinsamen Gehäuse befinden. Beim Verschwenken bleibt auch die Spiegelfläche des Weitwinkelspiegels innerhalb des gemeinsamen Gehäuses. Das Gehäuse der Außenspiegelanordnung ragt zwar hier vom Fahrzeug aus nicht weiter nach außen als bel einem herkömmlichen Rückspiegel mit nur einer Spiegelfläche, aber da der Weitwinkelspiegel sich in dem gemeinsamen Gehäuse befindet, kann mittels dieses auch hier kein Winkelbereich sichtbar gemacht werden, der sich etwa mittig hinter dem Fahrzeug befindet.

In der US 2003/0026009 A 1 ist ein Außenspiegel für ein Kraftfahrzeug beschrieben, bei dem eine Spiegelfläche an einem abgewinkelten Arm asymmetrisch angebracht ist, wobei der Spiegel um eine horizontale parallel zum Fahrzeug verlaufende Achse schwenkbar ist, die sich in der Grundstellung im äußeren Randbereich des Spiegels befindet. Dadurch gelangt der Spiegel, wenn er um 180° geschwenkt wird in eine Außenstellung, In der er weiter von der Karosserie des Fahrzeugs entfernt ist. Beim Schwenken des Spiegels wird jedoch die Neigung der Spiegelfläche nicht beeinflusst, so dass sich für den Fahrer auch in der Außenstellung des Spiegels keine Einsicht In Winkelbereiche ergibt, die weiter innen hinter dem Fahrzeug liegen.

In der EP 0 385 814 B1 ist ein Außenspiegel beschrieben, bei dem sich ebenfalls die Spiegelfläche aus der Grundstellung in eine äußere Stellung schwenken lässt. Dieser Außenspiegel ist in erster Linie für Wohnwagenanhänger an PKWs vorgesehen. Durch das Schwenken des Spiegels gelangt dieser weiter nach außen und somit an der Karosserie des Anhängers vorbei, welcher breiter ist als das den Anhänger ziehende Fahrzeug, so dass der Fahrer nun an dem Anhänger vorbei schauen kann. Hier ist aber ebenfalls keine Kippstellung oder Neigung der Spiegelfläche vorgesehen, so dass in der Außenstellung der mit dem Spiegel einsehbare Winkel nicht verändert wird. Es geht vielmehr darum, dem Fahrer überhaupt die Beobachtung des nachfolgenden Verkehrs zu ermöglichen, wenn er mit einem breiteren Anhänger fährt. Die Schwenkbewegung der Spiegelfläche ist so, dass die Spiegelfläche sich beim Schwenken auf einer Kurvenbahn bewegt, aber im Ergebnis in der Außenstellung verglichen mit der Grundstellung eine seitliche Verschiebung erfährt und wieder etwa in der gleichen Ebene liegt.

Aus dem Stand der Technik sind außerdem verschiedene konstruktive Lösungen bekannt, bei denen ein Außenspiegel über Mechanismen wie Zahnstangen, Spindeln oder dergleichen in einer linearen geführten Translationsbewegung aus der Grundstellung heraus nach außen hin in eine Außenstellung verschoben werden. Derartige Lösungen sind beispielsweise in der DE 39 39 807 C2 oder in der US 2002/0021506 A 1 beschrieben. Bei diesen Lösungen ist schon aufgrund der Konstruktion kein zusätzliches Verkippen der Spiegelfläche möglich.

Die JP 8 282379 A beschreibt ein Kraftfahrzeug mit einem Außenspiegel, der die eingangs genannten Merkmale aufweist. Hier handelt es sich allerdings um einen hinten an der Rückseite des Fahrzeugs angebrachten Außenspiegel, den der Fahrer in der Normalstellung nicht einsehen kann. Nur wenn der Spiegel ausgefahren wird, kann der Fahrer diesen einsehen und zwar nur mittelbar über den am Führerhaus angebrachten Außenspiegel. Der hinten am Fahrzeug angebrachte Spiegel ist somit kein Rückspiegel im eigentlichen Sinne, da er selbst keine Sicht zurück erlaubt. Außerdem ist die Anbringung derartiger Zusatzgeräte an einem Kraftfahrzeug immer problematisch und meist nicht mit der Straßenverkehrszulassungsordnung vereinbar. ***Hier sind zudem Bauelemente des Schwenkmechanismus außen am Spiegel angebracht.***

Die GB 499 802 A beschreibt einen am Führerhaus eines Kraftfahrzeugs außen angebrachten Rückspiegel, der einen Mechanismus aufweist, mittels dessen man den Spiegel nach außen bewegen und dabei den Winkel, der über den Spiegel einsehbar ist, verändern kann. Dazu wird der Außenspiegel über ein Gestänge in einer Führung entlang einer Kurvenbahn verschoben. Nachteilig an diesem bekannten Außenspiegel ist, dass sich Teile des Verschiebemechanismus im Inneren des Führerhauses befinden.

Die Aufgabe der vorliegenden Erfindung besteht darin, einen Außenrückspiegel für ein Kraftfahrzeug der eingangs genannten Gattung zur Verfügung zu stellen, welcher es einerseits ermöglicht, weiter mittig hinter dem Fahrzeug liegende Bereiche für den Fahrer sichtbar zu machen, der aber andererseits so konzipiert ist, dass die zugelassene Fahrzeugbreite in der Grundstellung nicht überschritten wird, bei dem kein zusätzliches Bauteil am Fahrzeug notwendig wird, welches eine Zulassung nach der Straßenverkehrszulassungsordnung benötigt ***und der einem normgerechten Außenspiegel für diesen Fahrzeugtyp entspricht.***

Die Lösung dieser Aufgabe liefert ein Außenrückspiegel für ein Kraftfahrzeug der eingangs genannten Gattung mit den Merkmalen des Hauptanspruchs.

Erfindungsgemäß ist vorgesehen, dass ***der Außenspiegel ein Außenrückspiegel ist und die Bauelemente des Schwenkmechanismus In der Normalstellung im Inneren des Gehäuses des Außenspiegels untergebracht sind.***

Die Erfindung liefert demnach eine Lösung, mittels derer ein Außenspiegel geschaffen wird, der in seiner Normalstellung bevorzugt so konfiguriert sein kann, dass er in seinen Abmessungen und/oder In seinem Abstandmaß zur Karosserie des Kraftfahrzeugs einem normgerechten Außenspiegel für diesen Fahrzeugtyp entspricht. Optisch von außen her gesehen, muss sich somit dieser neuartige Außenspiegel nicht von einem herkömmlichen Spiegel unterscheiden. In der Normalstellung kragt er nicht weiter vom Fahrzeug nach außen als der herkömmliche Spiegel, so dass keine Probleme im Hinblick auf eine Überschreitung der Fahrzeugbreite bestehen, solange der Außenspiegel sich In der Normalstellung befindet, was bei der gewöhnlichen Fahrt des Kraftfahrzeugs im Straßenverkehr in der Regel der Fall ist. Wird jedoch aufgrund besonderer Umstände vom Fahrer eine Einsicht In sonst nicht einsehbare Winkel gewünscht, beispielsweise wenn ein Zugfahrzeug einen Container aufnimmt, beim Rangieren mit dem Fahrzeug oder dergleichen und eine Einsicht in die etwa mittig hinter dem Fahrzeug befindliche Hakenaufnahme vorteilhaft ist, kann der Fahrer eine Spiegelfläche des Außenspiegels nach außen verfahren, welche dann in der Endstellung zusätzlich verkippt wird, so dass die Einsicht in den gewünschten Winkelbereich ermöglicht wird.

Die vorliegende Erfindung bezieht sich zwar vorrangig auf Nutzfahrzeuge, bei denen die vorgenannten Probleme beim Rangieren etc. auftreten, ist aber auch anwendbar bei PKWs oder Geländewagen, insbesondere, wenn diese beispielsweise mit einem Wohnanhänger fahren. In diesem Fall ist ein Ausfahren des Spiegels in eine Außenstellung und zusätzliches Kippen dazu geeignet, sonst nicht zugängliche Winkelbereiche sichtbar zu machen. Die Anbringung eines zusätzlichen Spiegels erübrigt sich.

Wenn der Fahrer eines LKWs bei der erfindungsgemäßen Lösung beispielsweise mit einem Zugfahrzeug einen Container aufnimmt oder andere Manöver durchführt, bei denen eine Rücksicht in bestimmte Winkelbereiche notwendig wird, fährt er dazu die Spiegelfläche in die Außensteilung. Anschließend fährt er die Spiegelfläche wieder zurück in die Normalstellung und hat im Straßenverkehr einen Außenspiegel, der so angeordnet ist, dass eine zulässige Gesamtbreite des Fahrzeugs nicht überschritten wird. Durch den motorischen Schwenkmechanismus kann der Fahrer das Ausfahren des Außenspiegels vom Fahrzeuginneren aus bewirken.

Durch den Schwenkmechanismus bewegt sich die Spiegelfläche zunächst in etwa auf einer Kreisbahn, unter Beibehaltung ihrer Position etwa parallel zur Ursprungsebene der Normalstellung. Erst gegen Ende der Schwenkbewegung beginnt die Kippbewegung, durch die die Spiegelfläche einwärts in Richtung auf das Fahrzeug gekippt wird. Durch das nach außen schwenken und kippen kann der Fahrer weiter in den Bereich schauen, der mittig hinter dem Fahrzeug liegt oder beispielsweise bei einem LKW mittig durch ein rückwärtiges Fenster in der Fahrerkabine hindurch.

Dabei kann beispielsweise die Spiegelfläche an einem Gestänge gelenkig montiert sein und das Gestänge schwenkt bei Verfahren der Spiegelfläche um wenigstens eine parallel zur Ebene der Spiegelfläche verlaufende Achse. Dabei kann der Schwenkmechanismus beispielsweise so ausgebildet sein, dass die Spiegelfläche beim Verfahren in die Außenstellung wenigstens über einen Teil des Verfahrwegs eine Ausrichtung etwa parallel zur Ebene der Spiegelfläche in der Normalstellung belbehält und dabei im Verfahrweg ein konkreter Punkt der Spiegelfläche sich etwa auf einer Kreisbahn bewegt. Bevorzugt legt ein Punkt auf der Spiegelfläche bei diesem Schwenken in die Außenstellung in etwa einen Weg von 135 ° bis etwa 180 ° zurück.

Erfindungsgemäß umfasst der Schwenkmechanismus ein Gestänge, welches nach Art eines Parallelogrammgestänges ausgebildet ist, welches wenigstens zwei in einem Endbereich an einem fest im Gehäuse des Außenspiegels angebrachten Bauelement angelenkte Stangen oder Lenker umfasst, welche in ihrem anderen Endbereich an zueinander beabstandeten Punkten an einem schwenkbaren Bauelement angelenkt sind, an welchem sich die Spiegelfläche befindet, wobei die Stangen oder Lenker bei der Schwenkbewegung in die Außenstellung unterschiedliche Schwenkwinkelwege zurücklegen und die Stangen oder Lenker unterschiedlich lang sind.

Gemäß der Erfindung kommen für den Antrieb des Schwenkmechanismus die unterschiedlichsten konstruktiven Detaillösungen in Betracht. Beispielsweise kann der Schwenkmechanismus eine motorisch angetriebene Welle, gegebenenfalls dieser zugeordnete Getriebeelemente oder einen pneumatischen Antrieb umfassen. Für den Antrieb der Welle kann insbesondere ein Elektromotor dienen, der entweder direkt antreibt oder beispielsweise mit einer Untersetzung oder Übersetzung arbeitet, die ein Zahnradgetriebe oder dergleichen umfasst. Aber auch pneumatische Antriebe bieten sich an, da In Nutzfahrzeugen in der Regel Druckluft ohnehin zur Verfügung steht. Diese mechanischen Bauelemente können problemlos von der Baugröße her so dimensioniert sein, dass der gesamte Mechanismus im Inneren des Gehäuses des Außenspiegels untergebracht werden kann.

Gemäß einer bevorzugten Weiterbildung der Erfindung kann der Schwenkmechanismus beispielsweise ein Parallelogrammgestänge umfassen, welches mit wenigstens einer angetriebenen Welle verbunden ist und an dem die Spiegelfläche gelenkig angebracht ist. Diese Lösung bietet sich an, um die für die Schwenkbewegung der Spiegelfläche notwendigen Kräfte von einer angetriebenen Welle auf die Spiegelfläche direkt oder beispielsweise ein plattenförmiges Element, an dem die Spiegelfläche angebracht ist, zu übertragen.

Gemäß einer bevorzugten Weiterbildung der Erfindung weisen die an dem fest Im Gehäuse des Außenspiegels angebrachten Bauelement angelenkten Stangen oder Lenker des Gestänges, die etwa die Anordnung eines Parallelogramms bilden, in der Seitenansicht gesehen eine etwas unterschiedliche Form auf, wobei die Stange oder der Lenker, die (der) welter innen (zum Fahrzeug hin) liegt etwa eine flache S-Form aufweist mit einem Versatz oder einer Verkröpfung In einem etwa mittleren Bereich und/oder wobei die Stange oder der Lenker, die (der) weiter außen (vom Fahrzeug weg) liegt eine stärkere Verkröpfung oder einen in einem stärkeren Radius gebogenen Bereich aufweist.

Gemäß einer Weiterbildung der Erfindung ist es bevorzugt so, dass die an voneinander beabstandeten Punkten an der Spiegelfläche gelenkig angreifenden Stangen des Parallelogrammgestänges so geformt und beabstandet sind, dass die Stangen sich in der ausgefahrenen Endstellung der Schwenkbewegung in einem Bereich berühren und damit die maximale Kippstellung definiert und der Kippwinkel begrenzt werden. Alternativ können auch andere Anschlagmittel vorgesehen sein, die den Schwenkweg und/oder den maximalen Kippwinkel In der äußeren Endstellung begrenzen.

Weiterhin ist es gemäß einer bevorzugten konstruktiven Detaillösung so, dass das fest im Gehäuse des Außenspiegels angebrachte Bauelement wenigstens eine Grundplatte umfasst, die eine mittige etwa kreisrunde Ausnehmung aufweist, mittels derer der Schwenkmechanismus an einer Montagesäule im Gehäuse des Außenspiegels festlegbar Ist, an deren Abmessungen die kreisrunde Ausnehmung angepasst ist. Bei manchen Typen von Außenspiegeln ist im Gehäuse bereits eine solche Montagesäule vorhanden, die man dann für die Festlegung der Grundplatte des erfindungsgemäßen Schwenkmechanismus nutzen kann. Außerdem ergibt sich so eine optimale Nutzung des Bauraums im Inneren des Spiegelgehäuses, da sich die Grundplatte und gegebenenfalls noch weitere Platten des Schwenkmechanismus um die Montagesäule herum erstrecken.

Ein wesentlicher Vorteil des erfindungsgemäßen Außenrückspiegels ist, dass dieser in der Normalstellung in seinen Abmessungen und/oder in seinem Abstandmaß zur Karosserie des Kraftfahrzeugs einem normgerechten Außenspiegel für diesen Fahrzeugtyp entspricht. Hier unterscheidet sich die erfindungsgemäße Lösung von allen bekannten Lösungen, bei denen man Spiegelanordnungen mit zusätzlichen Spiegeln verwendet, die permanent vom Fahrzeug aus weit nach außen ragen.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 eine Seitenansicht eines erfindungsgemäßen Außenspiegels gemäß einem Ausführungsbeispiel der Erfindung in der eingefahrenen Ausgangsstellung;
Figur 2 eine Draufsicht des in Figur 1 dargestellten Ausßenspiegels;
Figur 3 einen Querschnitt durch den Außenspiegel von Figur 2;
Figur 4 eine Seitenansicht des Außenspiegels von Figur 1, jedoch in der ausgefahrenen Stellung;
Figur 5 eine Draufsicht des Außenspiegels in der ausgefahrenen Stellung von Figur 4;
Figur 6 einen Querschnitt durch den ausgefahrenen Außenspiegel von Figur 5;
Figur 7 eine schematisch vereinfachte Draufsicht eines Teils des Schwenkmechanismus für einen Außenspiegel gemäß einem Ausführungsbeispiel der vorliegenden Erfindung in der eingefahrenen Ausgangsstellung;
Figur 8 eine entsprechende schematisch vereinfachte Seitenansicht eines Teils des Schwenkmechanismus nach dem Ausführungsbeispiel von Figur 7 in der eingefahrenen Ausgangsstellung;
Figur 9 eine perspektivische Ansicht eines Teils des Schwenkmechanismus nach dem Ausführungsbeispiel von Figur 7 in der eingefahrenen Ausgangsstellung;
Figur 10 eine weitere Seitenansicht eines Teils des Schwenkmechanismus nach dem Ausführungsbeispiel von Figur 7 in der eingefahrenen Ausgangsstellung in Richtung des Pfeils X von Figur 8 gesehen;
Figur 11 eine schematisch vereinfachte Draufsicht eines Teils des Schwenkmechanismus für einen Außenspiegel gemäß einem Ausführungsbeispiel der vorliegenden Erfindung in der ausgefahrenen Außenstellung;
Figur 12 eine entsprechende schematisch vereinfachte Seitenansicht eines Teils des Schwenkmechanismus nach dem Ausführungsbeispiel von Figur 11 in der ausgefahrenen Außenstellung;
Figur 13 eine perspektivische Ansicht eines Teils des Schwenkmechanismus nach dem Ausführungsbeispiel von Figur 11 in der ausgefahrenen Außenstellung.

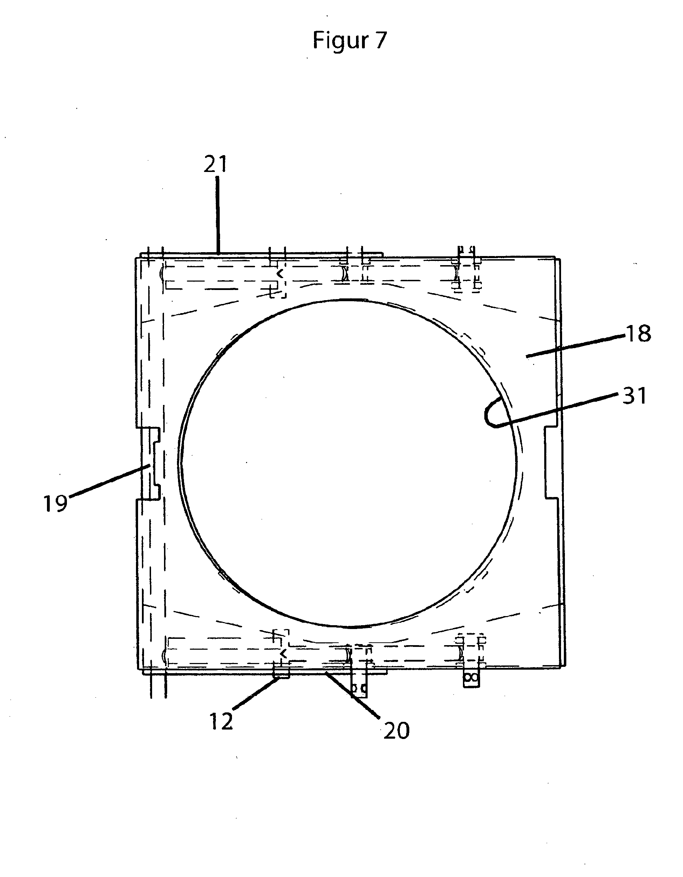

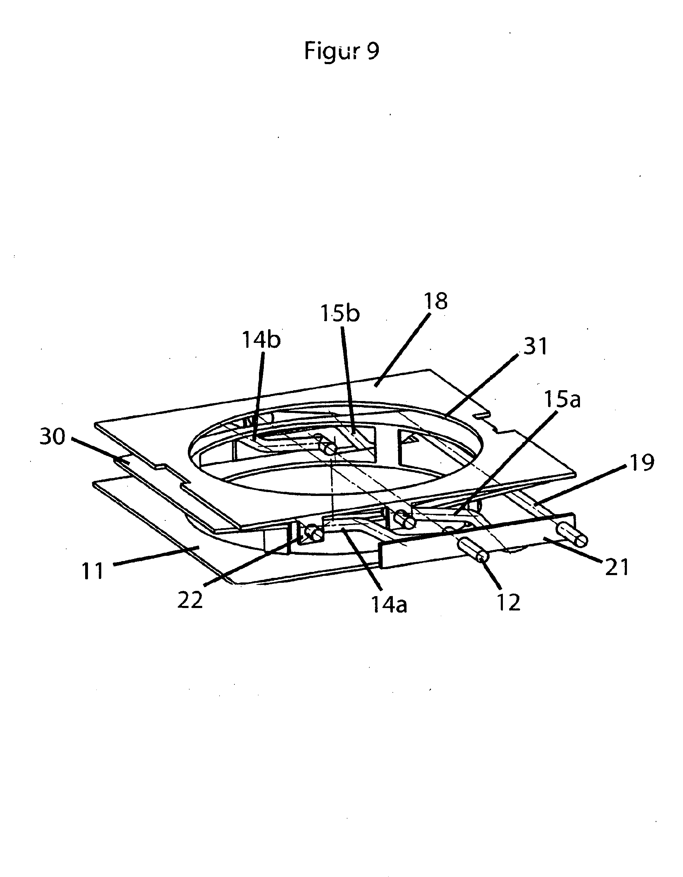

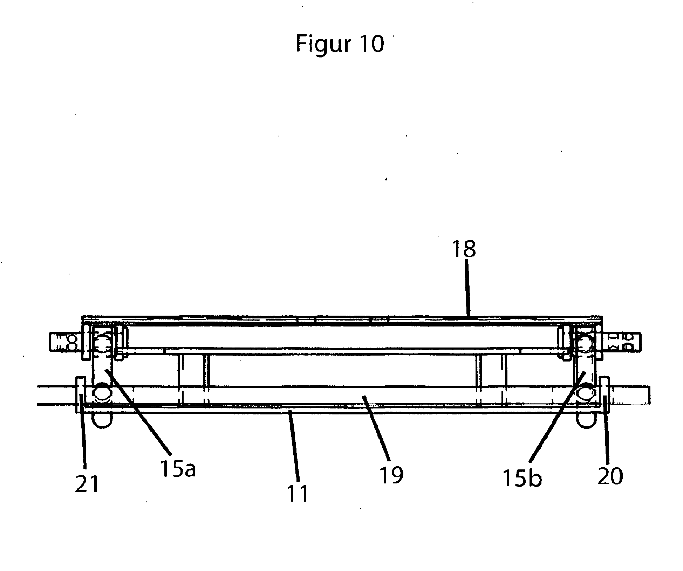

Nachfolgend wird auf die Figuren 7 bis 13 Bezug genommen und anhand dieser wird der prinzipielle Aufbau des Schwenkmechanismus für einen erfindungsgemäßen Außenspiegel erläutert. Dieser Schwenkmechanismus befindet sich wie zuvor bereits beschrieben wurde in dem Gehäuse des Außenspiegels, wobei in den Figuren 7 bis 13 dieses Gehäuse nicht dargestellt ist, sondern nur der Schwenkmechanismus und wobei die Darstellung schematisch vereinfacht ist und nur die wesentlichen Elemente zeigt, um das Funktionsprinzip der vorliegenden Erfindung zu erläutern. Der Schwenkmechanismus umfasst eine Grundplatte 11, die fest im Gehäuse des Außenspiegels montiert sein kann und an der ein Gestänge gelagert ist. Dieses Gestänge umfasst eine erste in Abwinklungen 20, 21 der Grundplatte 11 drehbar gelagerte Welle 12, die über ein hier nicht dargestelltes Antriebsrad entweder direkt oder unter Zwischenschaltung eines Getriebes von einem Motor, beispielsweise einem Elektromotor (nicht dargestellt) angetrieben wird. Wird der Motor betätigt, dann dreht sich die Welle 12 um ihre Achse und das mit der Welle 12 verbundene Gestänge 14, welches in etwa ein Parallelogrammgestänge ist, mit je zwei Stangen an jeder Seite sowie eine obere schwenkbare Platte 18 werden aus der Zeichenebene in Figur 7 heraus angehoben. Das Gestänge umfasst insgesamt vier Stangen 14 a, 14 b, 15 a, 15 b und zwar je zwei Stangen an jeder Seite der Grundplatte 11 und der oberen Platte 18. Dabei ist mindestens eine Stange 14 a an einer Seite an ihrem unteren Ende mit der Welle 12 verbunden und die zweite Stange 14 b verläuft mit Abstand deckungsgleich zu dieser an der gegenüberliegenden Seite von Grundplatte 11 und oberer Platte 18. Zwei weitere Stangen 15 a und 15 b verlaufen jeweils an jeder Seite von den Abwinklungen 20, 21 ausgehend nach oben zur schwenkbaren Platte 18 (siehe Figur 9), wobei sie jeweils in Längsrichtung der Platte zu den Stangen 14 a und 14 b versetzt angeordnet sind und etwa gleich wie diese verlaufen, allerdings eine etwas andere Verkröpfung aufweisen, deren Bedeutung später noch näher erläutert wird.

Die beiden Stangen 15 a, 15 b sind jeweils an ihren unteren Enden mit einer drehbar in den Abwinklungen 20, 21 der Grundplatte 11 gelagerten Querstange 19 verbunden, auch um das Gestänge zu stabilisieren. Selbstverständlich könnte man beispielsweise auch diese Querstange 19 antreiben anstelle der Welle 12. Die vier Stangen 14 a, b, und 15 a, b verlaufen zumindest abschnittsweise etwa im rechten Winkel zu der Welle 12 und sind Teil des Gestänges 14, wobei die Stangen allerdings keinen geradlinigen Verlauf haben, sondern Verkröpfungen aufweisen, wie später noch näher erläutert wird. Die Stangen 14, 15 sind an ihren oberen jeweils der Welle abgewandten Enden beispielsweise über Bolzen 16, 17 gelenkig mit einer schwenkbaren oberen Platte 18 verbunden, auf deren Oberseite die Spiegelfläche 28 montiert sein kann oder deren Oberseite auch direkt die Spiegelfläche 28 bilden kann.

Da die Grundplatte 11 und die obere schwenkbare Platte 18 über die vier Stangen 14 a, b, 15 a, b miteinander verbunden sind, dreht sich die Stange 19 bei Antrieb der Welle 12 mit. Die jeweils oberen Enden der vier Stangen 14 a, b, 15 a, b sind über die Bolzen 16, 17 gelenkig mit der oberen Platte 18 verbunden, wobei diese Platte 18 dazu unterseitig beispielsweise nach unten hin ausgerichtete von der Platte 18 abgewinkelte Gabeln 22 oder andersartige Lager aufweisen kann, in denen die Bolzen 16, 17 drehbar gelagert sind.

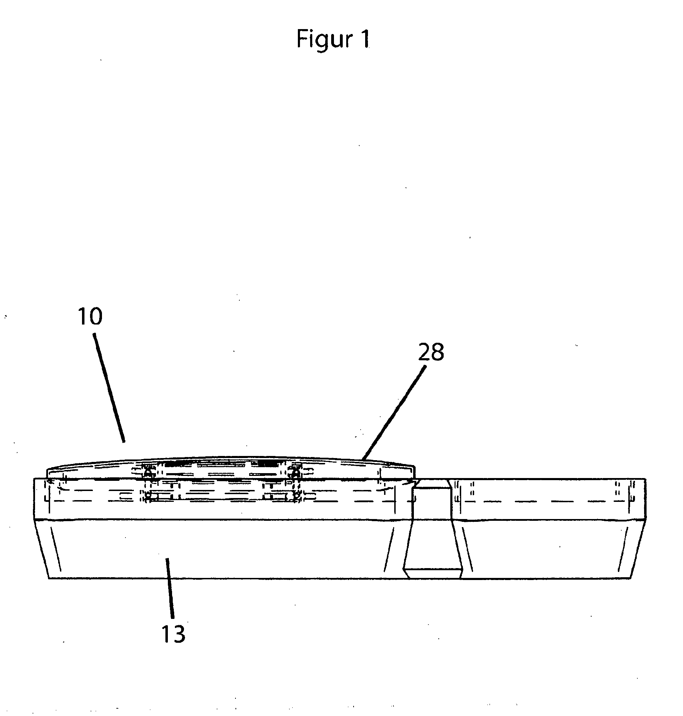

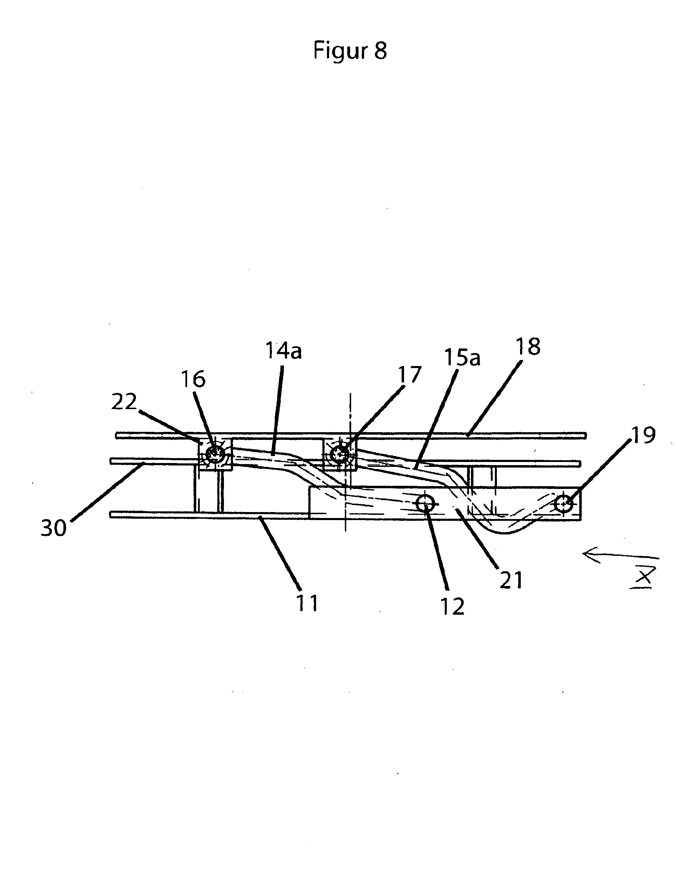

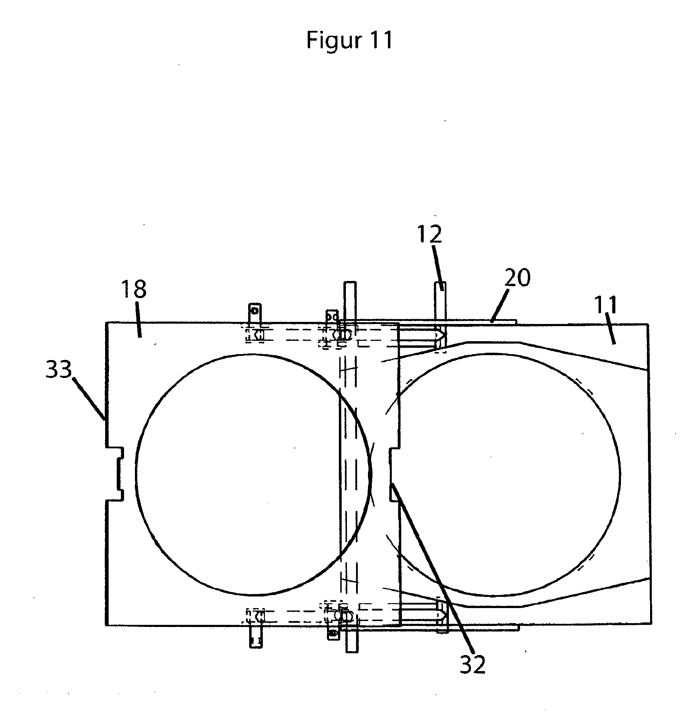

Somit wird mit den vier Stangen 14 a, b, 15 a, b in etwa ein Parallelogrammgestänge 14 geschaffen. Das Parallelogrammgestänge greift damit an insgesamt vier Punkten unterseitig an der Platte 18 an, hebt diese an und schwenkt sie, wenn über den Antrieb die Welle 12 in Drehung versetzt wird. Die Platte 18 bzw. ein gedachter Punkt auf dieser Platte bewegt sich bei diesem Schwenkvorgang aus der Grundstellung gemäß Figuren 7 bis 10 in die ausgefahrene Außenstellung gemäß den Figuren 11 bis 13 jeweils in der Seitenansicht gesehen auf einer Kurvenbahn, zumindest anfänglich annähernd auf einer Kreisbahn, wobei sie auf ihrem Schwenkweg anfänglich etwa bis zu einem oberen Scheitelpunkt der Kurvenbahn in der Bewegung etwa annähernd eine Lage parallel zu der Ebene der Grundplatte 11 einnimmt. Aus Figur 8 ist erkennbar, dass die Platte 18 (und damit die Spiegelfläche) in der Normalstellung unmittelbar über der Grundplatte 11 und parallel zu dieser liegt und aus Figur 7 geht hervor, dass die Platte 18 auch quasi innerhalb des Grundrisses der Grundplatte, also in der Draufsicht etwa deckungsgleich zu der Grundplatte 11 liegt. Eine solche konstruktive Ausführungsform hat den Vorteil, dass man den Außenspiegel dann so ausführen kann, dass er in der Normalstellung wie ein normgerechter herkömmlicher Außenspiegel dimensioniert ist. Man kann demnach den Schwenkmechanismus für das Ausfahren der Spiegelfläche 28 beispielsweise in dem Hohlraum unterbringen, der in einem Gehäuse eines Außenspiegels unterhalb der Spiegelfläche ohnehin vorhanden ist. Ein solcher beispielhafter Außenspiegel, in den der erfindungsgemäße Schwenkmechanismus eingebaut werden kann, ist in den Figuren 1 bis 6 dargestellt und wird anhand dieser noch näher erläutert.

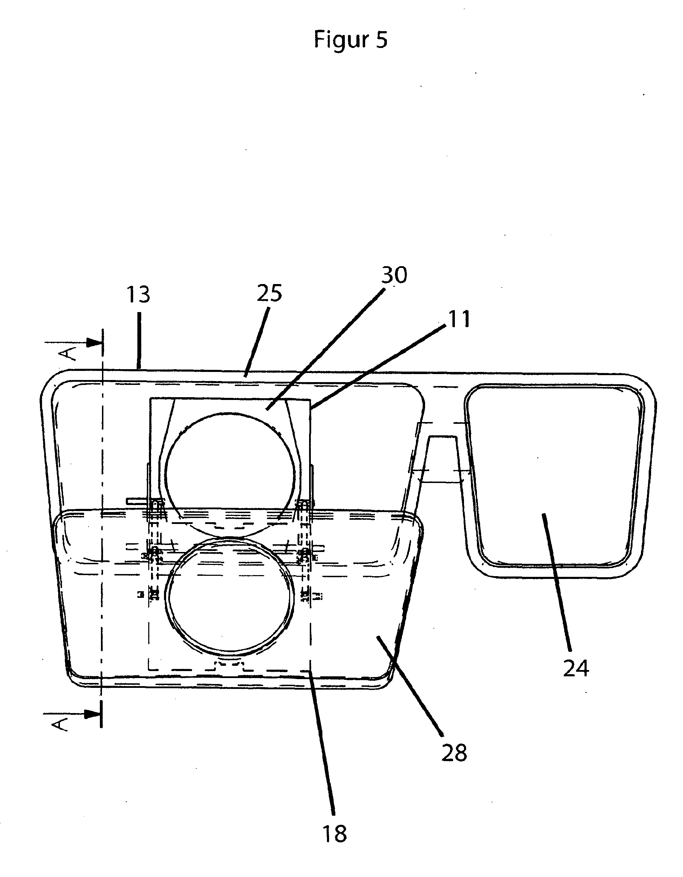

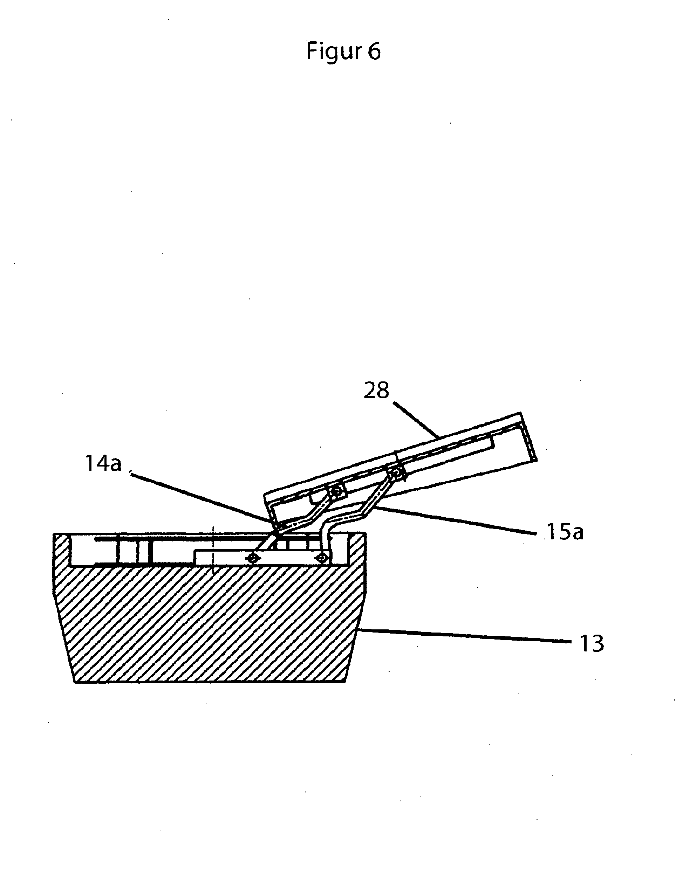

Der Vergleich der Figuren 7 und 11 sowie 8 und 12 zeigt, welcher Verfahrweg sich beim Ausfahren der Spiegelfläche auf der Platte 18 aus der Normalstellung in die Außenstellung ergibt. Die Spiegelfläche gelangt in dem Ausführungsbeispiel annähernd um das Maß der Breite der Grundplatte 11 weiter nach außen und macht daher die Einsicht in sonst nicht einsehbare Winkelbereiche möglich. Der Abstand der Spiegelfläche von der Karosserie in der Normalstellung wird definiert durch den Abstand des fest an der Karosserie montierten Spiegelgehäuses von der Karosserie. Das Spiegelgehäuse ist wie bei einem herkömmlichen Außenspiegel über einen Ausleger außen am Führerhaus eines LKWs befestigt. Wenn die Spiegelfläche in die Außenstellung ausgefahren wird, ändert sich der Abstand des Spiegelgehäuses zur Karosserie in diesem Ausführungsbeispiel nicht, da das Spiegelgehäuse ja fest am Fahrzeug montiert ist und nur die Spiegelfläche aus dem Gehäuse seitlich nach außen heraus geschwenkt wird. Der Abstand der Spiegelfläche zur Karosserie in der Außenstellung ergibt sich somit aus dem ursprünglichen Abstand des Spiegelgehäuses zuzüglich des Verfahrwegs (in der Projektion) der Spiegelfläche 28 (siehe auch die Figuren 5 und 6, die jeweils den Außenspiegel mit ausgefahrener Spiegelfläche 28 zeigen.

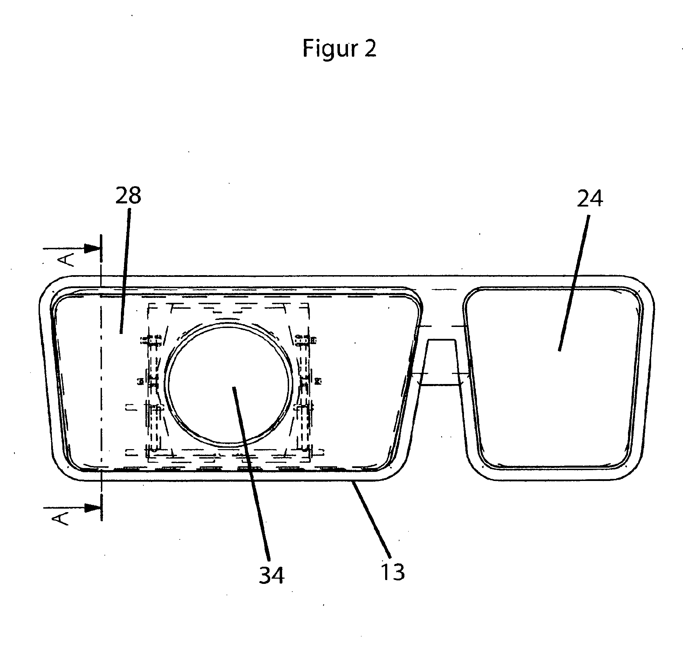

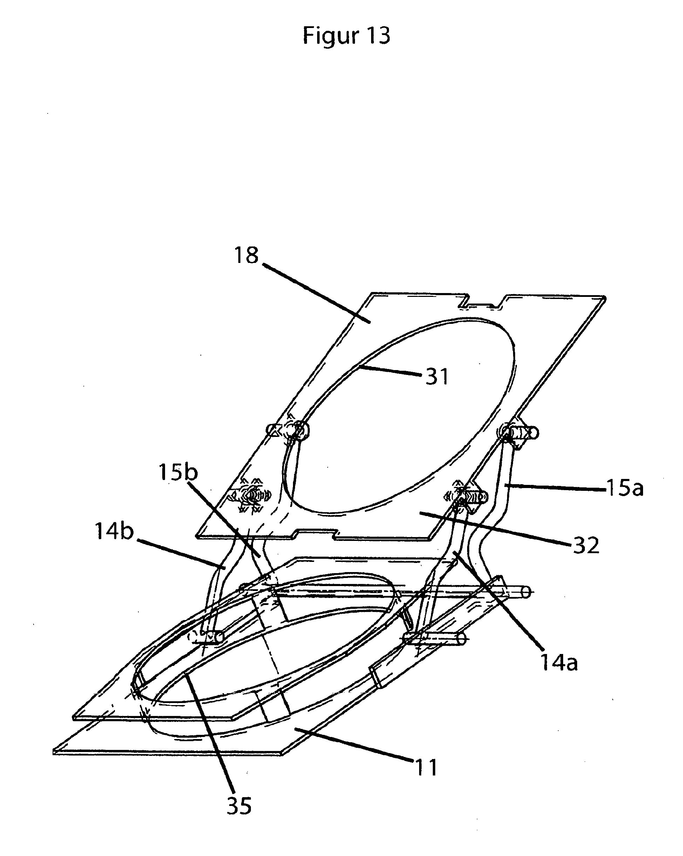

In den Figuren 8 und 9 erkennt man, dass sich zwischen der Grundplatte 11 und der oberen schwenkbaren Platte 18 noch eine Zwischenplatte 30 befindet, die montagetechnische Gründe hat und die fest an der Grundplatte 11 verankert ist. Die Grundplatte 11 hat eine etwa mittige kreisrunde Ausnehmung 33 (siehe Figur 13) und auch die Zwischenplatte 30 hat ebenso wie die obere schwenkbare Platte 18 jeweils etwa mittig eine etwa kreisrunde Ausnehmung 31, so dass es möglich ist, die Anordnung der Platten 11, 30, 18 über eine Montagesäule 34 zu stülpen, welche in einem herkömmlichen Außenspiegel vorhanden ist, so dass auf diese Weise die Platten mit dem Schwenkmechanismus in dem Außenspiegel eingepasst und befestigt werden können. Diese Montagesäule 34 kann man in Figur 2 der Anmeldung erkennen und man sieht dort auch, wie der Schwenkmechanismus im Inneren des Gehäuses 13 des Außenspiegels platzsparend untergebracht ist. Die erfindungsgemäße Anordnung mit dem Schwenkmechanismus ist somit an die Innenkonstruktion eines herkömmlichen Außenspiegels adaptiert. Es versteht sich, dass hier eine Anpassung an einen bestimmten Typ eines Außenspiegels eines Herstellers beispielhaft gezeigt wurde und somit die Adaption bei einem anderen Außenspiegeltyp entsprechend erfolgen muss. Die konkrete Anpassung in den vorliegenden Ausführungsbeispielen ist also keineswegs beschränkend zu verstehen. Sofern in dem Gehäuse eines Außenspiegels genügend Bauraum vorhanden ist, kann man die Anordnung mit den Platten auch auf andere Weise montieren, wobei gegebenenfalls eine Adaption auch entfallen kann. Auch ist natürlich eine Neukonstruktion eines Außenspiegels unter Verwendung des erfindungsgemäßen Gedankens möglich. Die vorliegende konkrete Lösung gemäß dem Ausführungsbeispiel hat allerdings den Vorteil, dass keinerlei Änderungen im Außengehäuse des serienmäßig vorhandenen Außenspiegels notwendig sind und dass ein sehr rascher Umbau mit verhältnismäßig geringem Montageaufwand möglich ist.

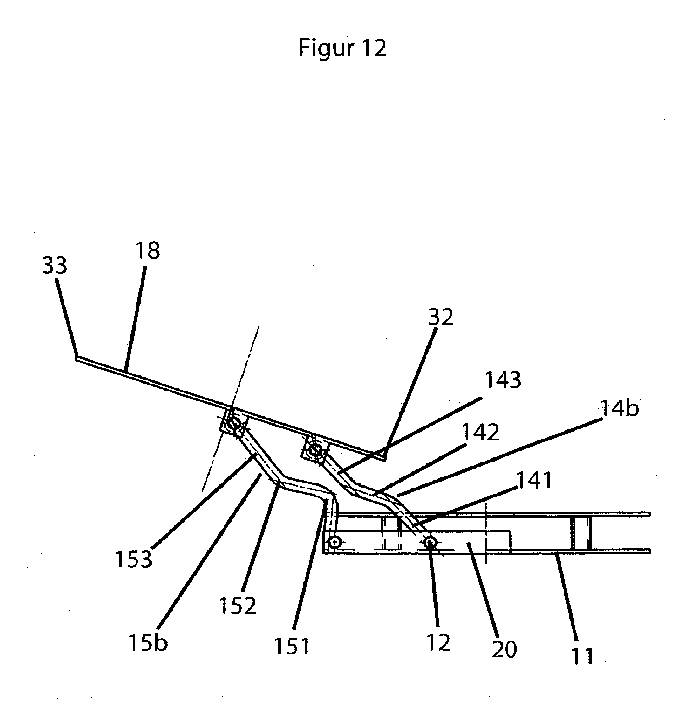

Nachfolgend wird nun auf die Figuren 12 und 13 Bezug genommen, die den erfindungsgemäßen Schwenkmechanismus mit der oberen Platte 18 jeweils in der ausgefahrenen Stellung des Außenspiegels in der Seitenansicht und in der Perspektive zeigen. Man erkennt, dass die Stangen 14 a und 14 b des Gestänges etwas anders geformt sind als die Stangen 15 a und 15 b. Die Stangen 15 a, b sind etwas stärker verkröpft und sie sind auch insgesamt ein Stück länger als die beiden Stangen 14 a, 14 b, an denen die Welle 12 angreift und die in Bezgu auf den Grundriss der Grundplatte 11 weiter innen liegen. Dies hat zur Folge, dass beim Hochschwenken der oberen schwenkbaren Platte 18 etwa bei Erreichen des oberen Scheitelpunkts in der Schwenkbahn ein Kippeffekt auftritt, denn die kürzeren Stangen 14 a, b ziehen das zur Grundplatte (also einwärts) gelegene Ende 32 nach Überschreiten des Scheitelpunkts nach unten, so dass sich die Platte 18 allmählich aus einer zur Grundplatte 11 parallelen Stellung in eine geneigte Kippstellung bewegt, bei der das einwärts gelegene Ende 32 tiefer und näher an der Grundplatte 18 liegt, als das dieser abgewandte Ende 33. Diese Kippstellung kann man in Figur 12 gut erkennen. Diese Kippstellung der oberen Platte und damit der auf dieser montierten Spiegelfläche in der ausgefahrenen Stellung des Außenspiegels hat den Vorteil, dass dem Fahrer die Einsicht in einen gewünschten Winkelbereich ermöglicht wird, in den er in der Normalstellung des Außenspiegels keine Einsicht hat. Durch diese Kippstellung wie in Figur 12 gezeigt wird die Spiegelfläche nach dem Ausfahren quasi nach innen in Richtung auf das Fahrzeug und somit zum Fahrer hin gekippt. Die Platte 18 und somit die erweiterte Spiegelfläche stehen in der am Fahrzeug montierten Stellung des Außenspiegels in etwa senkrecht, so dass der Fahrer nun weiter in einen hinter dem Fahrzeug liegenden Bereich Einsicht hat, was insbesondere beim Rangieren zur Aufnahme eines Anhängers oder dergleichen vorteilhaft ist.

Den Kippeffekt beim Schwenken der oberen Platte 18 nach außen kann man auch dadurch unterstützen, dass man die weiter außen liegenden Stangen 15 a, 15 b stärker abgewinkelt oder verkröpft ausbildet als die weiter innen zur Grundplatte 11 hin liegenden beiden Stangen 14 a, b. In Figur 12 kann man erkennen, dass die beiden Stangen 14 a, b nur eine geringe etwa flach S-förmige Verschwenkung etwa in der Mitte aufweisen, während die beiden Stangen 15 a, b nach etwa einem Drittel der Länge ein fast rechtwinklig geformtes Knie ausbilden, wobei danach wieder eine Krümmung in die Gegenrichtung erfolgt. In der Endstellung liegen die jeweils verkröpften Bereiche der Stangen 15 a, b und 14 a, b, nahe aneinander, je nach Form der Stangen können sie sich sogar in der Endstellung berühren. In Figur 12 ist eine Stellung gezeigt, bei der sich die Stangen 14 b, 15 b in ihrem etwa mittleren Bereich, dort wo sich bei der Stange 15 b das Knie befindet, noch nicht ganz berühren. Schwenkt man noch etwas weiter, kommt es zu einer solchen Berührung und damit auch zu einem Anschlag, der das Ende der Schwenkbewegung, den maximalen Schwenkweg und auch den Kippwinkel in dieser Endstellung definiert. Man kann beispielsweise einen Kippwinkel von bis zu 20 ° oder bis zu 30 ° vorsehen, wobei der Außenspiegel in Richtung auf das Fahrzeug kippt, so dass der Außenspiegel in der Außenstellung einen stumpfen Winkel von beispielsweise zwischen 135 ° und 165 °, bevorzugt etwa im Bereich von 150 ° bis 160 ° zur Ebene des Außenspiegels in der Normalstellung (Ausgangsstellung) einnimmt.

Der Schwenkweg des Außenspiegels und derjenige der beiden Stangen 14 b, 15 b des Gestänges ist bevorzugt ebenfalls begrenzt, wobei die innen liegende Stange 14 b bevorzugt kürzer ist als die außen liegende Stange 15 b und daher diese innen liegende Stange 14 b ausgehend von der Normalstellung einen etwas größeren Schwenkweg zurücklegt als die außen liegende Stange 15 b, beispielsweise beträgt der Schwenkweg der Stangen zwischen etwa 135 ° und etwa 160 °.

Die rechte und innere Stange 14 b in Figur 12 hat ausgehend von ihrem unteren Anlenkpunkt an der Abwinklung 20 der Grundplatte 11 zunächst einen geraden unteren Abschnitt 141, dann folgt eine seitliche Verschwenkung, die sich etwa über einen mittleren Bereich 142 der Stange 14 b erstreckt und dann folgt nach oben hin erneut eine Verschwenkung in die Gegenrichtung, so dass sich ein oberer Abschnitt 143 der Stange anschließt, der etwa in gleicher Richtung verläuft wie der untere Abschnitt, aber seitlich zu diesem versetzt. Dadurch ergibt sich insgesamt eine flache S-Form. Der obere Abschnitt 143 ist dann an seinem oberen Ende gelenkig an einer Gabel angelenkt und somit gelenkig mit der oberen schwenkbaren Platte 18 verbunden.

Die rechte und (vom Fahrzeug ausgesehen und in Bezug auf die Grundplatte 11) äußere Stange 15 b weist von ihrem unteren Anlenkpunkt ausgehend einen kurzen geraden Abschnitt auf, an den sich ein Bogen von etwa 90 ° anschließt, der wiederum in einen kurzen geraden Abschnitt übergeht, wodurch ein Knie 151 ausgebildet ist. Daran schließt sich nach oben hin eine Verschwenkung 152 in die Gegenrichtung an, woran sich dann wiederum ein etwas längerer oberer Abschnitt 153 anschließt, der an seinem oberen Ende über eine Gabel gelenkig mit der Unterseite der oberen schwenkbaren Platte 18 verbunden ist. Der obere Abschnitt 153 der äußeren Stange 15 b verläuft abgesehen von der gekippten Endstellung immer etwa parallel zu dem oberen Abschnitt 143 der inneren Stange 14 b, weshalb das Gestänge auch als Parallelogrammgestänge bezeichnet wird. Jedoch verläuft der unterste Abschnitt der äußeren Stange bis zu dem Knie 151 aufgrund der stärkeren Verkröpfung der äußeren Stange 15 b im Vergleich zu der inneren Stange 14 b in einem spitzen Winkel zu deren geradem unteren Abschnitt 141, wie man in Figur 12 gut erkennen kann. Ein solches Gestänge mit je zwei auf diese Art geformten Stangen 14 a, 15 a bzw. 14 b, 15 b ist auf jeder Seite der Anordnung der Platten 11 , 18 vorhanden wie man in Figur 13 sieht.

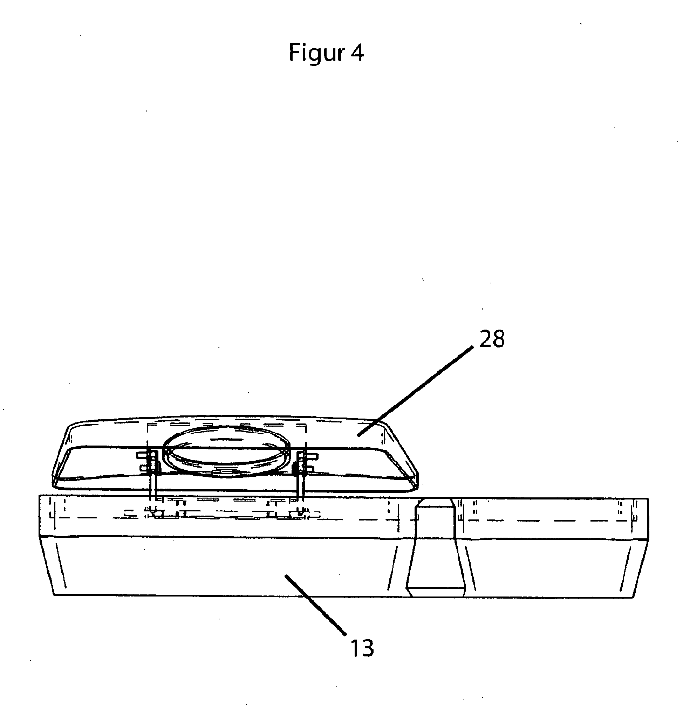

Nachfolgend wird nun unter Bezugnahme auf die Figuren 1 bis 6 ein beispielhafter Außenspiegel beschrieben, in den der zuvor beschrieben erfindungsgemäße Schwenkmechanismus eingebaut wurde. Dabei zeigen die Figuren 1 bis 3 zunächst den insgesamt mit dem Bezugszeichen 10 bezeichneten Außenspiegel in der Grundstellung, also mit eingefahrener Spiegelfläche 28 und die Figuren 4 bis 6 zeigen den Außenspiegel in der ausgefahrenen Außenstellung. Der Außenspiegel 10 umfasst ein Gehäuse 13 und eine aus dem Korpus des Gehäuses 13 nach vorn und gleichzeitig zur Seite hin ausfahrbare Spiegelfläche 28, die mittels des Schwenkmechanismus ausgefahren und vor Erreichen der Endstellung gekippt wird, was man insbesondere in Figur 6 gut erkennen kann. Dort kann man auch die verkröpften Stangen 14 a, 15 a des Gestänges erkennen. In Figur 5 sieht man Teile des in das Gehäuse 10 eingebauten Schwenkmechanismus, nämlich die Grundplatte 11, die innen im Gehäuse zuunterst liegt, die Zwischenplatte 30 und gestrichelt eingezeichnet ist auch die obere schwenkbare Platte 18, die unter der in Figur 5 ausgefahrenen Spiegelfläche 28 liegt.

Bei LKWs befindet sich oft noch oberhalb der eigentlichen Hauptspiegelfläche 28 eine Nebenspiegelfläche 24, die jedoch für die vorliegende Erfindung nicht von Bedeutung ist. Die Erfindung betrifft ebenso gut Außenspiegel mit nur einer Spiegelfläche wie sie beispielsweise für PKWs verwendet werden. Zum Verständnis der räumlichen Anordnung des Außenspiegels 10 ist zu beachten, dass dieser in am Fahrzeug montierten Zustand so angeordnet ist, dass sich in den Figuren 2 und 5 die Nebenspiegelfläche 24 oberhalb der Hauptspiegelfläche 28 befindet und dass sich in Figur 5 die ausgefahrene Spiegelfläche 28 vom Fahrzeug gesehen außen befindet, das heißt, dass die Kante 25 die dem Fahrzeug zugewandte Innenkante des Gehäuses 13 ist.

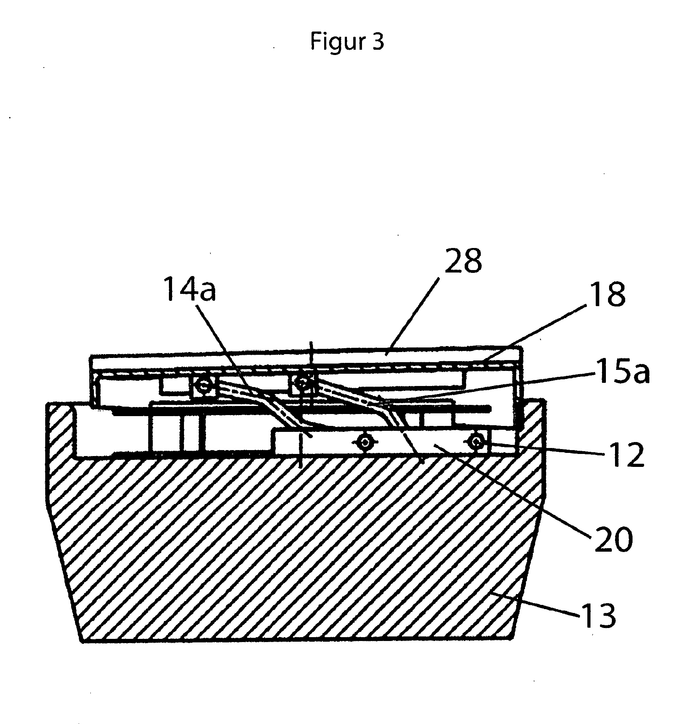

Die Figuren 3 und 6 zeigen jeweils Schnittansichten quer durch das Gehäuse 13 des Außenspiegels. Man erkennt, dass in der Grundstellung gemäß Figur 3 der Schwenkmechanismus mit dem Gestänge weitgehend im Gehäuse 13 liegt, wobei die Spiegelfläche 28 wie bei einem herkömmlichen Außenspiegel etwas nach oben hin vorsteht. Die übrigen Bauteile des Schwenkmechanismus liegen unterhalb der Spiegelfläche 28 und sind daher in der Grundstellung (wie auch Figur 2 zeigt) für den Betrachter nicht sichtbar. Hier wird auch ein Vorteil der Erfindung deutlich, der darin liegt, dass der Schwenkmechanismus in den vorhandenen Bauraum im Inneren eines herkömmlichen Spiegelgehäuses genügend Platz hat, so dass das Gehäuse 13 nicht vergrößert werden muss. In der Außenstellung gemäß Figur 6 wird hingegen die Spiegelfläche 28 vom Fahrer aus gesehen nach außen hin verschoben und das Gehäuse ist nicht mehr abgedeckt, sondern oberseitig offen.

### Bezugszeichenliste

- 10: Außenspiegel
- 11: Grundplatte
- 12: Welle
- 13: Gehäuse
- 14: Gestänge
- 14 a: Stange
- 14 b: Stange
- 15 a: Stange
- 15 b: Stange
- 16: Bolzen
- 17: Bolzen
- 18: obere Platte
- 19: Stange
- 20: Abwinklung
- 21: Abwinklung
- 22: Gabel
- 23: Stange
- 24: Nebenspiegelfläche
- 25: innere Kante des Gehäuses
- 26: Abwinklung
- 27: Getrieberad
- 28: Spiegelfläche
- 30: Zwischenplatte
- 31: Ausnehmung
- 32: einwärts gelegenes Ende
- 33: abgewandtes Ende
- 34: Montagesäule
- 35: Ausnehmung der Grundplatte

## Patentansprüche

1. Kraftfahrzeug, insbesondere Nutzfahrzeug, mit einem Außenspiegel, welcher wenigstens eine Splegelfläche (28) aufweist, die aus ihrer Normalstellung mittels eines Schwenkmechanismus in eine Außenstellung verfahrbar ist, in der diese Spiegelfläche einen größeren Abstand zur Außenbegrenzung der Karosserie des Fahrzeugs aufweist als in der Grundstellung, wobei der Schwenkmechanismus derart ausgebildet ist, dass die Spiegelfläche (28) in der Außenstellung gegenüber der Grundstellung nach außen hin verschoben und gleichzeitig um einen Winkel zum Kraftfahrzeug hin gekippt ausgerichtet ist, wobei der Schwenkmechanismus ein Gestänge umfasst, welches nach Art eines Parallelogrammgestänges ausgebildet ist, welches wenigstens zwei in einem Endbereich an einem fest im Gehäuse des Außenspiegels angebrachten Bauelement angelenkte Stangen oder Lenker umfasst, welche in ihrem anderen Endbereich an zueinander beabstandeten Punkten an einem schwenkbaren Bauelement angelenkt sind, an welchem sich die Spiegelfläche befindet, wobei die Stangen oder Lenker bei der Schwenkbewegung in die Außenstellung unterschiedliche Schwenkwinkelwege zurücklegen und die Stangen oder Lenker unterschiedlich lang sind,
**dadurch gekennzeichnet, dass** der Außenspiegel ein Außenrückspiegel ist und die Bauelemente des Schwenkmechanismus in der Normalstellung im Inneren des Gehäuses (13) des Außenspiegels untergebracht sind.

2. Kraftfahrzeug mit einem Außenspiegel nach Anspruch 1, **dadurch gekennzeichnet, dass** die an dem fest im Gehäuse des Außenspiegels angebrachten Bauelement angelenkten Stangen oder Lenker des Gestänges, die etwa die Anordnung eines Parallelogramms bilden, in der Seitenansicht gesehen eine etwas unterschiedliche Form aufweisen, wobei die Stange (14 a, 14 b) oder der Lenker, die (der) weiter innen (zum Fahrzeug hin) liegt etwa eine flache S-Form aufweist mit einem Versatz oder einer Verkröpfung in einem etwa mittleren Bereich und/oder wobei die Stange (15 a, 15 b) oder der Lenker, die (der) weiter außen (vom Fahrzeug weg) liegt eine stärkere Verkröpfung oder einen in einem stärkeren Radius gebogenen Bereich aufweist.

3. Kraftfahrzeug mit einem Außenspiegel nach einem der Ansprüche 1 oder 2, **dadurch gekennzeichnet, dass** die Spiegelfläche (28) beim Verfahren in die Außenstellung über einen Teil des Verfahrwegs eine Ausrichtung etwa parallel zur Ebene der Spiegelfläche in der Normalstellung beibehält und dabei im Verfahrweg ein konkreter Punkt der Spiegelfläche sich etwa auf einer Kreisbahn bewegt und dass nach Überschreiten eines Scheitelpunkts die Spiegelfläche (18, 28) in eine geneigte Stellung gekippt wird.

4. Kraftfahrzeug mit einem Außenspiegel nach Anspruch 3, **dadurch gekennzeichnet, dass** ein konkreter Punkt auf der Spiegelfläche (28) im Verfahrweg einen Teilkreis von wenigstens etwa 135 ° beschreibt.

5. Kraftfahrzeug mit einem Außenspiegel nach einem der Ansprüche 1 bis 4, **dadurch gekennzeichnet, dass** der Schwenkmechanismus eine motorisch angetriebene Welle (12), gegebenenfalls dieser zugeordnete Getriebeelemente oder einen pneumatischen Antrieb umfasst.

6. Kraftfahrzeug mit einem Außenspiegel nach einem der Ansprüche 1 bis 5, **dadurch gekennzeichnet, dass** die an voneinander beabstandeten Punkten an der Spiegelfläche (18, 28) gelenkig angreifenden Stangen (24 b, 25 b) des Parallelogrammgestänges so geformt und beabstandet sind, dass die Stangen sich In der ausgefahrenen Endstellung der Schwenkbewegung In einem Bereich berühren und damit die maximale Kippstellung definiert und der Kippwinkel begrenzt werden.

7. Kraftfahrzeug mit einem Außenspiegel nach einem der Ansprüche 1 bis 6, **dadurch gekennzeichnet, dass** das fest im Gehäuse des Außenspiegels angebrachte Bauelement wenigstens eine Grundplatte umfasst, die eine mittige etwa kreisrunde Ausnehmung (35) aufweist, mittels derer der Schwenkmechanismus an einer Montagesäule (34) im Gehäuse (13) des Außenspiegels festlegbar ist, an deren Abmessungen die kreisrunde Ausnehmung (35) angepasst ist.

8. Kraftfahrzeug mit einem Außenspiegel nach einem der Ansprüche 1 bis 7, **dadurch gekennzeichnet, dass** dieser in der Normalstellung in seinen Abmessungen und/oder In seinem Abstandmaß zur Karosserie des Kraftfahrzeugs einem normgerechten Außenspiegel für diesen Fahrzeugtyp entspricht.

## Claims

1. A motor vehicle, in particular a utility vehicle, comprising an exterior mirror, which encompasses at least one reflecting surface (28), which can be moved by means of a pivoting mechanism from its normal position into an exterior position, in which said reflecting surface encompasses a larger distance to the exterior limitation of the carriage of the vehicle than in the basic position, wherein the pivoting mechanism is embodied such that the reflecting surface (28) in the exterior position is shifted outwardly as compared to the basic position and is simultaneously oriented so as to be tilted at an angle towards the motor vehicle, wherein the pivoting mechanism comprises a rod assembly, which is embodied in the form of a parallelogram rod assembly, which comprises at least two bars or handlebars, which are linked to a component, which is fixedly attached in the housing of the exterior mirror in an end region and which, in their other end area, at points, which are spaced apart from one another, are linked to a pivotable component, on which the reflecting surface is located, wherein the bars or handlebars cover different pivot angle distances in response to the pivoting movement into the exterior position and the bars or handlebars have different lengths,
**characterized in that** the exterior mirror is an exterior rear view mirror and the components of the pivoting mechanism in the normal position are accommodated in the interior of the housing (13) of the exterior mirror.

2. The motor vehicle comprising an exterior mirror according to claim 1, **characterized in that** the bars or handlebars of the rod assembly, which are linked to the component, which is fixedly attached in the housing of the exterior mirror and which approximately form the arrangement of a parallelogram, encompass a slightly different shape, viewed in side view, wherein the bar (14a, 14b) or the handlebar, which is located further inside (towards the vehicle), encompasses a flat S-shape, comprising an offset or a cranked section in an approximately middle area and/or wherein the bar (15a, 15b) or the handlebar, which is located further outside (away from the vehicle), encompasses a larger cranked section or an area, which is curved at a higher radius.

3. The motor vehicle comprising an exterior mirror according to one of claims 1 or 2, **characterized in that** the reflecting surface (28) maintains an orientation approximately parallel to the plane of the reflecting surface in the normal position in response to being moved into the exterior position across a part of the movement range and a concrete point of the reflecting surface thereby moves approximately on a circular path in the movement range and that the reflecting surface (18, 28) is tilted into an inclined position after passing over a vertex.

4. The motor vehicle comprising an exterior mirror according to claim 3, **characterized in that** a concrete point on the reflecting surface (28) describes a reference circle of at least approximately 135° in the movement range.

5. The motor vehicle comprising an exterior mirror according to one of claims 1 to 4, **characterized in that** the pivoting mechanism comprises a motor-driven shaft (12), gear elements assigned thereto, if applicable, or a pneumatic drive.

6. The motor vehicle comprising an exterior mirror according to one of claims 1 to 5, **characterized in that** the bars (24b, 25b) of the parallelogram rod assembly, which are linked to the reflecting surface (18, 28) in an articulated manner at points, which are spaced apart from one another, are shaped and spaced apart such that, in the extended final position of the pivoting movement, the bars contact one another in one area and that the maximum tilt position is thus defined and the tilt angle is limited.

7. The motor vehicle comprising an exterior mirror according to one of claims 1 to 6, **characterized in that** the component, which is fixedly attached in the housing of the exterior mirror, comprises at least one base plate, which encompasses a central, approximately circular recess (35), by means of which the pivoting mechanism can be fixed to an assembly column (34) in the housing (13) of the exterior mirror, to the dimensions of which the circular recess (35) is adapted.

8. The motor vehicle comprising an exterior mirror according to one of claims 1 to 7, **characterized in that**, in the normal position, the dimensions and/or the distance dimensions of said exterior mirror to the carriage of the motor vehicle correspond to a standard exterior mirror for this vehicle type.

## Revendications

1. Véhicule automobile, notamment véhicule utilitaire avec un miroir extérieur qui comporte au moins une surface réfléchissante (28) qui au moyen d'un mécanisme de pivotement est déplaçable de sa position normale dans une position extérieure dans laquelle ladite surface réfléchissante présente un écart plus important par rapport à la délimitation extérieure de la carrosserie du véhicule que dans la position de base, le mécanisme de pivotement étant conçu de telle sorte que dans la position extérieure, la surface réfléchissante (28) soit déplacée vers l'extérieur par rapport à la position de base et simultanément soit orientée de la valeur d'un angle vers le véhicule automobile, le mécanisme de pivotement comprenant une tringlerie qui est conçue à la manière d'une tringlerie en parallélogramme qui comprend au moins deux tiges ou bras oscillants articulé(e)s dans une zone d'extrémité sur un élément de construction monté de manière fixe dans le corps du miroir extérieur, qui sur leur autre zone d'extrémité sont articulé(e)s sur des points écartés l'un de l'autre sur un élément de construction pivotant sur lequel se trouve la surface réfléchissante, lors du déplacement dans la position extérieure, les tiges ou bras oscillants parcourant des trajets d'angle de pivotement différents et les tiges ou bras oscillants présentant des longueurs différentes,
**caractérisé en ce que** le miroir extérieur est un rétroviseur extérieur et **en ce que** dans la position normale, les éléments de construction du mécanisme de pivotement sont logés à l'intérieur du corps (13) du rétroviseur.

2. Véhicule automobile avec un miroir extérieur selon la revendication 1, **caractérisé en ce qu'**en vue latérale, les tiges ou bras oscillants de la tringlerie qui sont articulées (e)s sur l'élément de construction monté de manière fixe dans le corps du miroir extérieur, qui forment approximativement la structure d'un parallélogramme présentent une forme quelque peu différente, la tige (14a, 14b) ou le bras oscillant se situant le plus à l'intérieur (en direction du véhicule) présentant approximativement une forme de S plat, avec un déport ou un coude dans une zone approximativement centrale et/ou la tige (15a, 15b) ou le bras oscillant se situant le plus à l'extérieur (en s'éloignant du véhicule) présentant un coude plus prononcé ou une zone recourbée de la valeur d'un rayon plus important.

3. Véhicule automobile avec un miroir extérieur selon la revendication 1 ou la revendication 2, **caractérisé en ce que** lors du déplacement dans la position extérieure, la surface réfléchissante (28) garde une orientation approximativement parallèle au plan de la surface réfléchissante dans la position normale et **en ce qu'**à cet effet, dans le trajet, un point concret de la surface réfléchissante se déplace approximativement sur une trajectoire et qu'après avoir dépassé un point culminant, la surface réfléchissante (18, 28) est pivotée dans une position inclinée.

4. Véhicule automobile avec un miroir extérieur selon la revendication 3, **caractérisé en ce qu'**un point concret sur la surface réfléchissante (28) décrit dans le trajet un cercle divisé d'au moins approximativement 135°.

5. Véhicule automobile avec un miroir extérieur selon l'une quelconque des revendications 1 à 4, **caractérisé en ce que** le mécanisme de pivotement comprend un arbre (12) entraîné par moteur, le cas échéant, des éléments de transmission associés à ce dernier ou un entraînement pneumatique.

6. Véhicule automobile avec un miroir extérieur selon l'une quelconque des revendications 1 à 5, **caractérisé en ce que** les tiges (24b, 25b) de la tringlerie en parallélogramme s'agrippant de manière articulée sur la surface réfléchissante (18, 28) sur des points écartés l'un de l'autre sont conformées et écartées de sorte que dans la position finale déployée du mouvement de pivotement, les tiges se touchent sur une zone et que de ce fait la position de basculement maximale soit définie et l'angle de basculement soit limité.

7. Véhicule automobile avec un miroir extérieur selon l'une quelconque des revendications 1 à 6, **caractérisé en ce que** l'élément de construction monté de manière fixe dans le corps du miroir extérieur comporte au moins une plaque de base qui comporte un évidement (35) central approximativement circulaire à l'aide duquel le mécanisme de pivotement peut s'immobiliser sur une colonne de montage (34) dans le corps (13) du miroir extérieur, aux dimensions de laquelle l'évidement (35) circulaire est adapté.

8. Véhicule automobile avec un miroir extérieur selon l'une quelconque des revendications 1 à 7, **caractérisé en ce que** dans la position normale, ce dernier correspond par ses dimensions et/ou par sa distance par rapport à la carrosserie du véhicule automobile à un miroir extérieur conforme aux normes pour ledit type de véhicule.
